(19) Europäisches Patentamt
European Patent Office
Office européen des brevets

(11) **EP 2 737 974 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
***B23Q 17/22*** *(2006.01)*      ***B23Q 17/24*** *(2006.01)*
***G01S 13/88*** *(2006.01)*

(21) Anmeldenummer: **13179305.1**

(22) Anmeldetag: **05.08.2013**

(54) **Verfahren zur Bestimmung von Abmessungen und/oder Positionsdaten eines Werkzeugs**

Method for the determination of dimensions and/or position data of a tool

Procédé de détermination des dimensions et/ou des données de position d'un outil

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2012 DE 102012111722**

(43) Veröffentlichungstag der Anmeldung:
**04.06.2014 Patentblatt 2014/23**

(73) Patentinhaber: **Ott-Jakob Spanntechnik GmbH 87663 Lengenwang (DE)**

(72) Erfinder:
• **Greif, Josef**
  **87654 Friesenried (DE)**
• **Bonerz, Stefan**
  **87616 Marktoberdorf (DE)**

(74) Vertreter: **Charrier, Rapp & Liebau Patentanwälte Fuggerstrasse 20 86150 Augsburg (DE)**

(56) Entgegenhaltungen:
**EP-A1- 2 402 114     DE-A1- 4 020 551
DE-A1- 19 813 041**

EP 2 737 974 B1

**Beschreibung**

Die Erfindung betrifft ein Verfahren zur Bestimmung von Abmessungen und/oder Positionsdaten eines Werkzeugs gemäß dem Oberbegriff des Anspruchs 1.

Nach der automatischen oder manuellen Einspannung eines Werkzeugs in einer Spannvorrichtung einer Arbeitsspindel eines Bearbeitungszentrums, einer Universalfräse oder einer anderen Werkzeugmaschine besteht vor der Einleitung des eigentlichen Bearbeitungsvorgangs die Notwendigkeit, die Lage des eingespannten Werkzeugs in der Spannvorrichtung der Arbeitsspindel genau zu bestimmen. Traditionell kann dies manuell durch mechanische Tastung geschehen, wodurch jedoch teil- oder vollautomatisierte Produktionsprozesse wesentlich arbeitsintensiver werden und länger dauern. Daher wird in der Praxis eine automatische Einmessung des ebenfalls automatisch gewechselten oder gespannten Werkzeugs bevorzugt. Die hierfür notwendigen Verfahren und Vorrichtungen basieren meistens auf optischen Messtechnologien, die im relativen schmutzigen Umfeld der spanabhebenden Metallbearbeitung bezüglich Zuverlässigkeit und Genauigkeit Probleme aufweisen.

So kann die Verunreinigung der Optik solcher Systeme durch Bohr- und Kühl-/Schmieremulsionen sowie Metallabrieb und Metallspäne zu einem Totalausfall der Messvorrichtung oder schlimmstenfalls zu wesentlichen unerkannten Messfehlern führen. Als Beispiel sei ein verbreitetes optisches Entfernungsmessverfahren genannt, welches auf der Phasenmessung eines sinusförmigen Hochfrequenzsignals basiert, das einem Laserstrahl aufmoduliert wird. Bei diesem Verfahren wird entlang der Messstrecke ein einzelnes rückstreuendes Ziel vorausgesetzt. Jeder zusätzliche Streukörper in Form eines auf der strahlformenden Optik befindlichen Partikels leistet bei einem solchen System einen wesentlichen Beitrag zu einer Verfälschung des Messergebnisses.

Aus der DE 40 20 551 A1 ist ein Verfahren zur Werkzeugüberwachung bekannt, bei dem ein Spindelkopf nach Aufnahme eines Werkzeuges in Rotation versetzt und in die Antennenkeule eines Millimeterwellen-Radars gebracht wird, welches die spezifisch relevanten Teile des Werkzeuges abtastet und feststellt, ob das Werkzeug vorhanden, der Werkzeugtyp richtig und das Werkzeug in Ordnung ist. Hierzu werden die an der Werkzeugoberflächenstruktur reflektierten Strahlungsanteile nach Betrag und Phase in einer Auswertelogik ausgewertet. Der im Betrieb gemessene Istwert wird mit einem zuvor bei einer Kalibrierung ermittelten Sollwert verglichen.

Die DE 198 13 041 A1 lehrt eine Vorrichtung zur Vermessung rotierender Gegenstände insbesondere von Werkzeugen, Werkstücken oder Maschinenteilen mit einem Sender und einem Empfänger zum Senden bzw. Empfangen elektromagnetischer Strahlung sowie einer Auswerteeinheit, die in der Lage ist, Frequenzdifferenzen zwischen einem Sendesignal und einem zugehörigen Empfangssignal zu detektieren. Die Frequenzen sind im Radarwellen- bzw. Mikrowellenbereich gewählt. In einer Auswerteeinheit ist ein Datenspeicher zum Abspeichern von Referenzdaten vorgesehen.

Beide vorausgehend genannten Schriften sehen die Anordnung eines Radarsenders und -empfängers im Bearbeitungsraum vor, um das Werkzeug schräg von vorne mit einem Radarsignal anzustrahlen. Dort stellt ein Radarsender und -empfänger jedoch ein Hindernis dar, welches die Bewegungsfreiheit des Werkzeugs im Bearbeitungsraum einschränkt.

Aus der EP 2 402 114 A1 ist eine Vorrichtung zum Schutz einer Arbeitsspindel und/oder eines gespannten Werkzeugs gegen Kollisionen mit Hindernissen im Bearbeitungsraum einer Bearbeitungsmaschine bekannt, bei der an oder in der Spindelnase, welche den Abschluss des Spindelkopfes zum Bearbeitungsraum hin bildet, eine Vielzahl von Abstandssensormodulen in einer Ausrichtung auf den Bearbeitungsraum angeordnet und mit einer gemeinsamen Signalverarbeitungseinrichtung verbunden sind, die aus den von den einzelnen Abstandssensormodulen abgegebenen Messsignalen bei Vorhandensein eines Hindernisses in einem vorbestimmten Bereich des Bearbeitungsraumes ein Warnsignal ableitet. Messobjekte sind hier nur im Bearbeitungsraum vorhandene Hindernisse, jedoch nicht das in der Arbeitsspindel gespannte Werkzeug. Aufgabe der vorliegenden Erfindung ist es, ein Verfahren zur Bestimmung von Abmessungen und/oder Positionsdaten eines Werkzeugs anzugeben, welches die eingangs beschriebenen Nachteile optischer Verfahren überwindet, also die durch die oben beschriebenen Umgebungseinflüsse erzeugten Messfehler eliminiert und dabei die Bewegungsfreiheit des Werkzeugs im Bearbeitungsraum nicht einschränkt.

Diese Aufgabe wird durch ein Verfahren mit den Merkmalen des Anspruchs 1 gelöst. Zweckmäßige Weiterbildungen und vorteilhafte Ausgestaltungen der Erfindung sind in den Unteransprüchen angegeben.

Erfindungsgemäß wird zur Bestimmung von Abmessungen und/oder Positionsdaten eines Werkzeugs, das in einer Spannvorrichtung einer Arbeitsspindel einer Bearbeitungsmaschine gespannt ist, wobei durch mindestens ein Radarmodul ein Radarsignal abgestrahlt und ein aus dem Bearbeitungsraum zurückgestreutes Radarsignal empfangen wird und aus dem empfangenen Signal Abmessungen des Werkzeugs und/oder Positionsdaten des Werkzeugs bezüglich der Spannvorrichtung ermittelt werden, ein Radarmodul verwendet, das an der dem Bearbeitungsraum der Bearbeitungsmaschine zugewandten Seite der Arbeitsspindel angeordnet ist, und durch das Werkzeug wird eine vorbestimmte Bewegung relativ zu dem Radarmodul oder relativ zu einer fixen Reflexionsoberfläche, über welche Signale von dem Werkzeug indirekt über Reflexion zu dem Radarmodul zurückgestreut werden, ausgeführt. Daten dieser Bewegung werden mit dem zurückgestreuten Signal zur Ermittlung der Abmessungen und/oder Positionsdaten des Werkzeugs verknüpft, wobei die vorbestimmte Bewegung eine Drehung um eine zum Normalenvektor einer reflektierenden Oberfläche orthogonale Achse ist, oder eine Translationsbewegung ist, deren Richtung eine Komponente in Normalenrichtung einer reflektierenden Oberfläche enthält.

Die Verwendung von Radarmodulen, die am vorderen Ende der Arbeitsspindel angeordnet sind, zur genauen Vermessung eingespannter Werkzeuge, z.B. Bohrer, ist insofern besonders vorteilhaft, als die Bewegungsfreiheit des Werkzeugs im Bearbeitungsraum durch das Vorhandensein von Radarmodulen an dieser Stelle keinerlei Einschränkung erfahrt und solche Module gleichzeitig auch dazu verwendet werden können, den Bearbeitungsraum bei einer Bewegung der Arbeitsspindel zu überwachen, um diese vor Kollisionen, beispielsweise durch Programmierfehler oder durch Einrichten eines für die Programmausführung unangemessenen Umfelds, zu schützen. Durch die Mehrfachnutzung ein und derselben Radarmodule für verschiedene Zwecke ergibt sich eine erhebliche Aufwandsersparnis.

Eine hohe Genauigkeit der Entfernungsmessung von einem Radarmodul an der Arbeitsspindel zum vorderen Ende eines gespannten Werkzeugs bedingt ein hohes Signal-/Rauschleistungsverhältnis des rückgestreuten Signals, welches sich nur bei verhältnismäßig kurzen Strecken erreichen lässt. Die räumliche Ausdehnung des Werkzeugs erfordert aber eine sehr hohe Bandbreite des Signals, um davon zusätzliche, nicht interessierende rückstreuende Gebiete auf der Oberfläche des Werkzeugs unterscheiden zu können. Daher ist es besonders vorteilhaft, wenn durch das Werkzeug eine vorbestimmte Bewegung relativ zu dem Radarmodul ausgeführt wird und die Daten dieser Bewegung mit dem zurückgestreuten Signal zur Ermittlung der Abmessungen und/oder Positionsdaten des Werkzeugs verknüpft werden.

Bei Kenntnis der Form und der sonstigen Eigenschaften des Werkzeugs kann nämlich aus einer Variation des rückgestreuten Signals infolge einer kontrollierten Bewegung des Werkzeugs relativ zu dem Radarmodul mittels entsprechender Signalverarbeitung die genaue Position des Werkzeugs in der Spannvorrichtung bestimmt werden. Eine solche vorbestimmte Bewegung des Werkzeugs kann in einer Drehung der Spannvorrichtung um eine zum Normalenvektor einer reflektierenden Oberfläche orthogonale Achse, oder einer Translationsbewegung, deren Richtung eine Komponente in Normalenrichtung einer reflektierenden Oberfläche enthält, bestehen.

Die die Abstrahlungsrichtung der Antennen von am vorderen Ende der Arbeitsspindel angeordneten Radarmodulen üblicherweise in einem spitzen Winkel zur Rotationsachse des Werkzeugs von der Spannvorrichtung fort weist, ist die direkte Rückstreuung vom vorderen Ende eines in den Bearbeitungsraum hinein ragenden Werkzeugs nur sehr schwach. Gerade die Position des vorderen Endes des Werkzeugs ist jedoch von besonderem Interesse, da sie wesentliche Aussagekraft über die richtige Länge und die korrekte Einspannung des Werkzeugs hat. Daher ist es zweckmäßig, wenn zum Zweck der Messung die Rückstreuung von dem Werkzeug zu dem Radarsystem zumindest teilweise über eine reflektierende Oberfläche erfolgt.

Eine solche reflektierende Oberfläche kann die Oberfläche einer der Arbeitsspindel gegenüberliegenden Wand des Bearbeitungsraumes sein, falls sich das Werkzeug während der Messung nahe an einer solchen Wand befindet. Gegebenenfalls kann das Werkzeug durch eine Bewegung der Arbeitsspindel an eine solche Wand angenähert werden. Die reflektierende Oberfläche kann auch eine Oberfläche eines in dem Bearbeitungsraum angeordneten Objektes sein, beispielsweise eines nur zu diesem Zweck vorgesehenen Reflektors, in dessen Nähe das Werkzeug vor der Messung bewegt wird.

Zusätzlich zu den vorausgehend genannten Arten einer vorbestimmten Bewegung des Werkzeugs kann auch eine Drehbewegung des Werkzeugs um seine Rotationsachse erfolgen.

Eine weitere Möglichkeit zur Bestimmung der Abmessungen und/oder Positionsdaten eines schlanken Werkzeugs, z.B. eines Bohrers, in einer Spannvorrichtung basiert auf der Variation der Intensität des von dem gesamten Werkzeug zurückgestreuten Signals in Abhängigkeit von der Frequenz. Hierzu muss die Frequenz des abgestrahlten Radarsignals variiert werden und zur Ermittlung der Abmessungen und/oder Positionsdaten des Werkzeugs muss die Änderung des zurückgestreuten Signals in Abhängigkeit von der Frequenz ausgewertet werden.

Wird das Werkzeug in einem bestimmten spitzen Winkel in Bezug auf seine Rotationsachse durch ein Signal mit einer bestimmten Frequenz angestrahlt, tritt ein Minimum der Intensität des rückgestreuten Signals auf. Die Kenntnis dieser Frequenz erlaubt unter Einbeziehung aller anderen Randbedingungen die Bestimmung der Länge des eingespannten Werkzeugs. Berechnungen an einem zylindrischen Körper zeigen im Frequenzbereich um 24 GHz Frequenzänderungen von etwa 3-6 MHz bei einer Längenänderung von 10 Mikrometern. Es ist daher zweckmäßig, zur Ermittlung der Abmessungen und/oder Positionsdaten des Werkzeugs mindestens ein Minimum des zurückgestreuten Signals als Funktion der Frequenz zu bestimmen.

Eine weitere Möglichkeit zur Bestimmung der die Lage eines eingespannten Werkzeugs in einer Spannvorrichtung ist das kontrollierte Eintauchen des Werkzeugs in einen einseitig offenen Hohlraum, dessen Öffnung in ihren Abmessungen die Außenmaße des Werkzeugs übersteigt. Das abgestrahlte Signal eines Radarmoduls kann in diesem Fall über den verbleibenden Zwischenraum in den durch das Werkzeug teilweise gefüllten Hohlraum eindringen. Die Intensität der Rückstreuung ist bei einer solchen Konfiguration stark frequenzabhängig. Aus der durch die Bewegung des Werkzeugs verursachten Änderung der Frequenzabhängigkeit des zurückgestreuten Signals können Abmessungen und/oder Positionsdaten des Werkzeugs bezüglich der Spannvorrichtung ermittelt werden.

Ferner besteht auch die Möglichkeit, das Werkzeug durch Bewegung der Spannvorrichtung an einen Körper mit bekannter Frequenzabhängigkeit des Rückstreuquerschnitts anzunähern und aus der durch diese Bewegung verursachten Änderung der Frequenzabhängigkeit des Rückstreuquerschnitts Abmessungen des Werkzeugs und/oder Positionsdaten des Werkzeugs bezüglich der Spannvorrichtung zu ermitteln.

Schließlich kann als Radarmodul auch ein multistatisches Ultrabreitband-Radarmodul mit mehreren räumlich verteilten, zum Senden oder Empfangen individuell auswählbaren Antennen verwendet werden. In diesem Fall wird nacheinander über jeweils eine der Antennen ein impulsförmiges Signal abgestrahlt und es werden aus dem Bearbeitungsraum zurückgestreute Signale über mehrere verschiedene andere Antennen empfangen. Aus den empfangenen Signalen und den Positionen der jeweils abstrahlenden Antenne und der empfangenden Antennen können dann Abmessungen des Werkzeugs und/oder Positionsdaten des Werkzeugs bezüglich der Spannvorrichtung ermittelt werden.

Weitere Besonderheiten und Vorzüge der Erfindung ergeben sich aus der folgenden Beschreibung von bevorzugten Ausführungsbeispielen anhand der Zeichnung. Es zeigen:

Fig.1 eine schematische Ansicht einer Arbeitsspindel mit einem gespannten Werkzeug und zwei Radarsystemen,

Fig. 2 die Anordnung von Fig. 1 mit einem ebenen Radarreflektor gegenüber der Arbeitsspindel,

Fig. 3 die Anordnung von Fig. 2 mit seitlich gekippter Arbeitsspindel,

Fig. 4 die Anordnung von Fig. 2 mit in Axialrichtung verschobener Arbeitsspindel,

Fig. 5 einen zylindrischen Körper mit einer Kennzeichnung von für seinen Rückstreuquerschnitt relevanten Parametern

Fig. 6 die Anordnung von Fig. 1 mit einem anderen Werkzeug und einem einseitig offenen Hohlraum als Radarreflektor

Fig. 7 die Anordnung von Fig. 1 mit einem Körper mit bekanntem Rückstreuquerschnitt als Radarreflektor

Fig.8 die Anordnung von Fig. 2, jedoch mit einem multistatischen Ultrabreitband-Radarmodul mit mehreren Antennen.

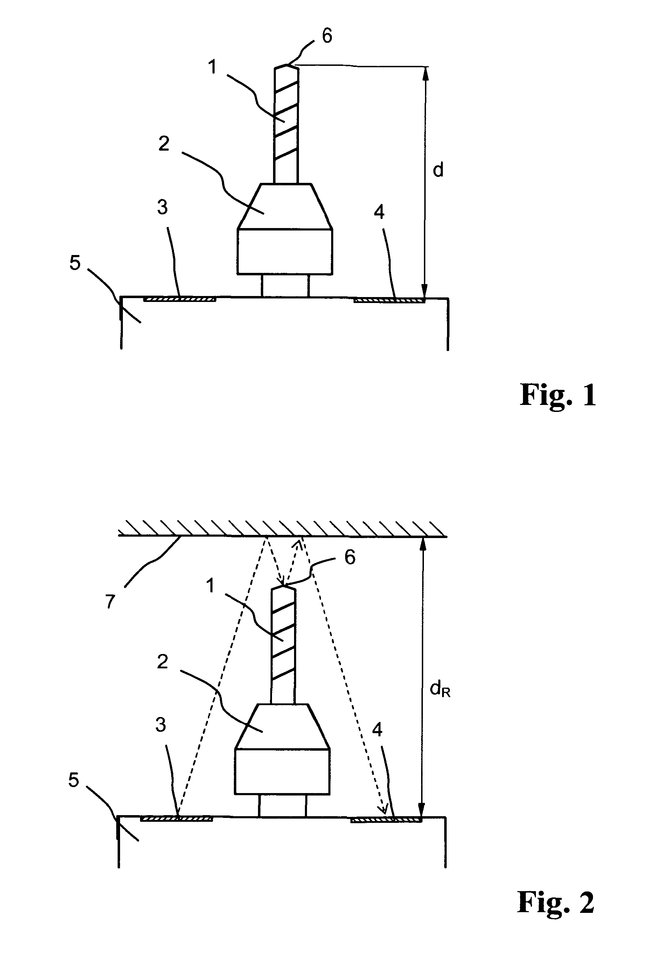

Ein in Fig.1 dargestelltes Werkzeug 1 ist in einer Spannvorrichtung 2 eingespannt und wird durch zum Kollisionsschutz installierte Radarmodule 3 und 4 mit Mikrowellensignalen angestrahlt. Die Anzahl der Radarmodule ist beispielhaft gemeint, d.h. es könnten auch mehr als zwei Radarmodule vorhanden sein. Für das erfindungsgemäße Verfahren würde auch ein einziges Radarmodul genügen, doch sind zur Abdeckung eines Winkels von 360° um die Spindelachse für den Kollisionsschutz im Regelfall mehrere Radarmodule an der Stirnseite der Arbeitsspindel 5 symmetrisch in Umfangsrichtung verteilt angeordnet.

Um die Länge d des eingespannten Werkzeugs 1 bezüglich der Stirnseite der Arbeitsspindel 5 zu ermitteln, muss die Entfernung des von der Spannvorrichtung 2 am weitesten entfernten Punktes 6 auf der Oberfläche des Werkzeugs 1 von den Radarmodulen 3 und 4 erfasst werden. Im Fall des in Fig. 1 als Werkzeug 1 angenommenen Bohrers ist dessen Spitze der besagte entfernteste Punkt 6. Hierbei kann sowohl die Verzögerungszeit zwischen Aussendung und Empfang eines Signals zwischen einem einzelnen Radarmodul 3 oder 4 und dem rückstreuenden Punkt 6, als auch zwischen einem ersten Radarmodul 3, dem rückstreuenden Punkt 6 und einem zweiten, unterschiedlich positionierten Radarmodul 4 ausgewertet werden.

In Fig. 2 ist durch gestrichelte Pfeile die Reflexion eines von dem Radarmodul 3 abgestrahlten Radarsignals an einer reflektierenden Oberfläche 7 zum vordersten Punkts 6 des Werkzeugs 1, von dort zurück zu der reflektierenden Oberfläche 7 und von dort zu dem anderen Radarmodul 4 angedeutet. Durch die reflektierende Oberfläche 7 wird die Intensität der Anstrahlung des Punktes 6 und der Rückstreuung von diesem Punkt, die bei der Anordnung von Fig. 1 nur durch Beugung bewirkt wird, wesentlich erhöht. Es versteht sich, dass die Signalintensität umso größer ist, je geringer der Anstand $d_R$ der reflektierenden Oberfläche 7 von den Radarmodulen 3 und 4 ist. Wenn die der Vorderseite der Arbeitsspindel 5 gegenüberliegende Wand des Bearbeitungsraumes weit entfernt und daher als reflektierende Oberfläche 7 von der Arbeitsspindel 5 nicht erreichbar ist, kann im Bearbeitungsraum ein Reflektor angeordnet werden, der von der Arbeitsspindel 5 zur Ausführung der Messung der Werkzeuglänge bzw. -position gezielt angefahren wird, um die in Fig. 2 dargestellte Konfiguration mit geringem Abstand des vorderen Endes 6 des Werkzeugs 1 von der reflektierenden Oberfläche 7 herbeizuführen.

Durch Rotation der Spannvorrichtung 2 samt Werkzeug 1 kann eine Variation des gesamten vom Werkzeug 1 zurückgestreuten Signals bewirkt werden, um die Rückstreuung von dem besonders interessierenden Punkt 6 durch anschließende Signalverarbeitung von anderen Bestandteilen des Empfangssignals zu separieren. Die Ausnutzung der vorhandenen Freiheitsgrade zur Bewegung der Spannvorrichtung 2 ergibt aber nur dann verwertbare Variationen des zurückgestreuten Signals, wenn die Bewegungen des Werkzeugs 1 relativ zu den Radarmodulen 3 und 4 erfolgen.

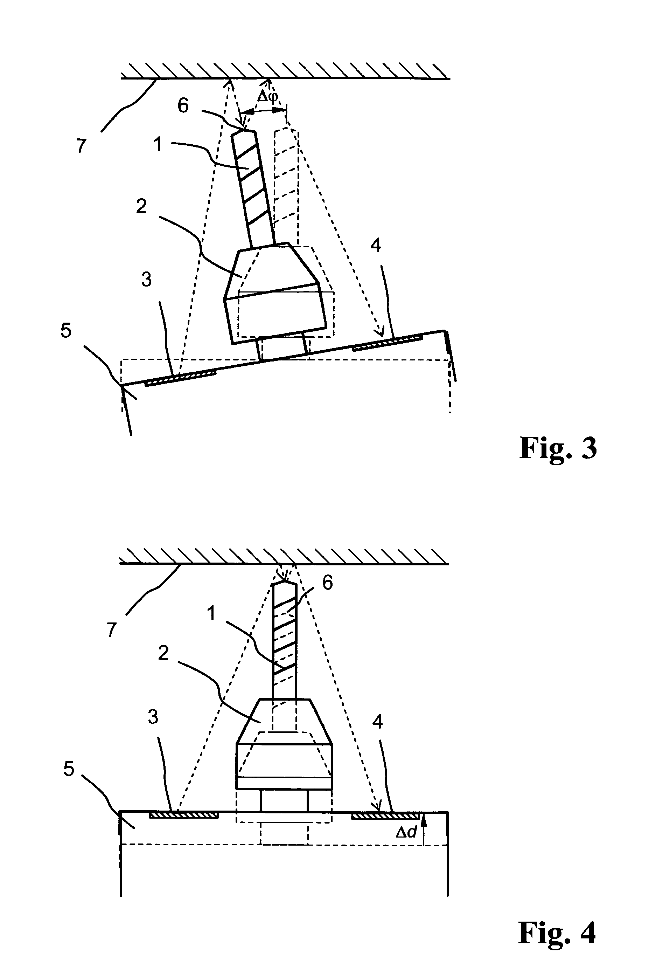

In Fig. 3 und Fig. 4 sind zwei Bewegungen der Spannvorrichtung 2 samt Werkzeug 1 dargestellt, welche relativ zu der fixen Reflexionsoberfläche 7 erfolgen und damit auch bei relativ zur Spannvorrichtung 6 unbeweglich angebrachten Radarmodulen 3 und 4 eine Variation der vom Werkzeug 1 indirekt über Reflexion an der Reflexionsoberfläche 7 zurückgestreuten Signale bewirken. Bei der Bewegung in Fig. 3 handelt es sich um eine Drehung der Arbeitsspindel 5 um einen Winkel $\Delta\varphi$ bezüglich einer zum Normalenvektor der Reflexionsoberfläche 7 orthogonalen Achse, während es sich bei der Bewegung in Fig. 4 um eine Translationsbewegung um eine Strecke $\Delta d$ in Normalrichtung der Reflexionsoberfläche 7 handelt. Die ursprüngliche Position der Arbeitsspindel 5 mit der Spannvorrichtung 2 und dem Werkzeug 1 ist jeweils gestrichelt dargestellt. Es ist deutlich erkennbar, dass sich in beiden Fällen die Gesamtlänge des Signalpfades von dem sendenden Radarmodul 3 zum vordersten Punkt 6 des Werkzeugs 1 und von dort zu dem empfangenden Radarmodul 4 durch die jeweilige Bewegung ändert. Diese Längenänderung hat eine entsprechende Änderung der Signallaufzeit zur Folge, die auswertbar ist.

Eine weitere in den Figuren nicht gezeigte Art der Bewegung des Werkzeugs 1 kann eine Rotation um seine Längsachse, d.h. seine normale Betriebsbewegung sein. Eine durch eine fehlerhafte, d.h. schräge Stellung des Werkzeugs 1 zur Spindelachse verursachte Taumelbewegung des Werkzeugs 1 ist in diesem Fall anhand einer charakteristischen periodischen Schwankung des zurückgestreuten Radarsignals detektierbar. Eine solche Schrägstellung des Werkzeugs 1 würde sich auch bei einer symmetrischen Schwenkbewegung entsprechend Fig. 3 nach links und nach rechts um betragsmäßig jeweils gleiche Winkel $+\Delta\varphi$ und $-\Delta\varphi$ äußern, nämlich in einer Unsymmetrie des Rückstreuverhaltens zwischen beiden Winkelstellungen.

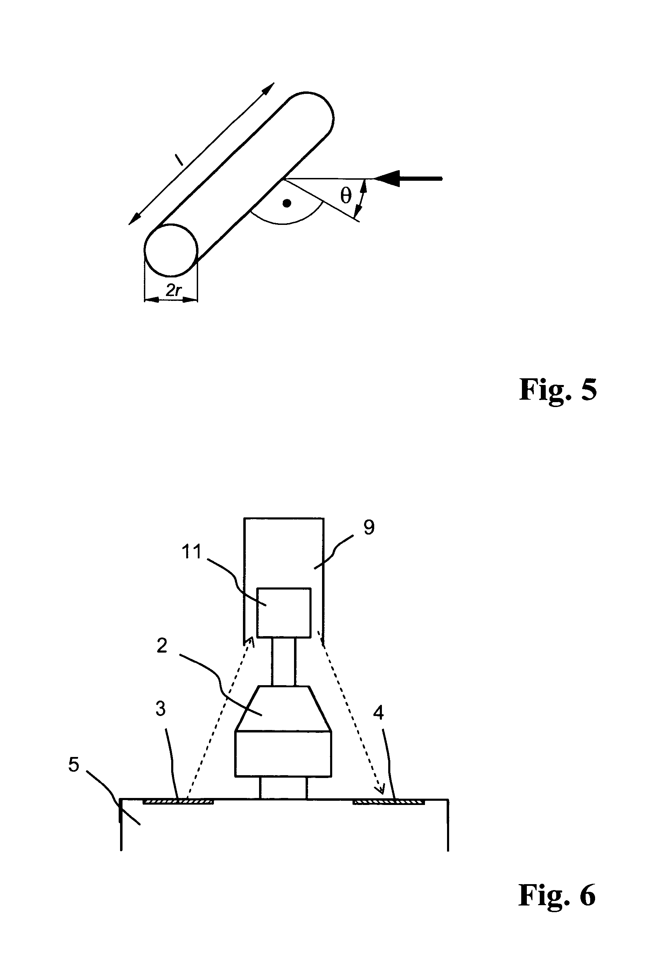

Das Prinzip einer Längenmessung an einem elektrisch leitfähigen schlanken Zylinder mittels Radar zeigt Fig. 5. Der Rückstreuquerschnitt $\sigma$ eines solchen Zylinders kann nach folgender Formel berechnet werden:

$$\sigma = [r \cdot \lambda \cdot \cos\Theta \cdot \sin^2(\beta \cdot l \cdot \sin\Theta)] / (2 \cdot \pi \cdot \sin^2\Theta)$$

Darin ist r der Radius des Zylinders, l seine Länge, $\lambda$ die Wellenlänge des auf den Zylinder eingestrahlten Radarsignals, $\Theta$ der Winkel zwischen dem Lot zur Längsachse des Zylinders und der in Fig. 5 durch einen auf den Zylinder weisenden Pfeil gekennzeichneten Einstrahlungsrichtung des Radarsignals und $\beta$ die Ausbreitungskonstante in dem Raum um den Zylinder.

Wie aus der Formel ersichtlich ist, verschwindet der Rückstreuquerschnitt $\sigma$, sofern die Bedingung $\beta \cdot l \cdot \sin\Theta = n \cdot \pi$ erfüllt ist. Bei gegebenem Einstrahlungswinkel $\Theta$ sind somit über das Produkt aus Ausbreitungskonstante $\beta$ und Länge l spezifische Frequenzen definiert, bei denen der Rückstreuquerschnitt $\sigma$ theoretisch ganz verschwindet, so dass die Länge l des Zylinders durch Variation der Frequenz und Detektion von Frequenzen, bei denen der Rückstreuquerschnitt ein Minimum aufweist, bestimmbar ist. Das in Fig.1 dargestellte schlanke Werkzeug 1 wird von einem Radarmodul 3 oder 4 unter einem relativ großen Winkel $\Theta$ angestrahlt. Weiterhin endet der für die Anstrahlung zugängliche Teil des Werkzeugs 1 in der Spannvorrichtung 2, die einen deutlich größeren leitfähigen Querschnitt hat. Sofern der Sprung des Querschnitts am Übergang vom Werkzeug 1 zur Spannvorrichtung 2 hinreichend groß ist, kann der für die Anstrahlung zugängliche Teil des Werkzeugs 1 als eigenständiger Streukörper betrachtet werden, welcher sich in seinem Rückstreuquerschnitt entsprechend dem anhand Fig.5 beschriebenen Modell verhält.

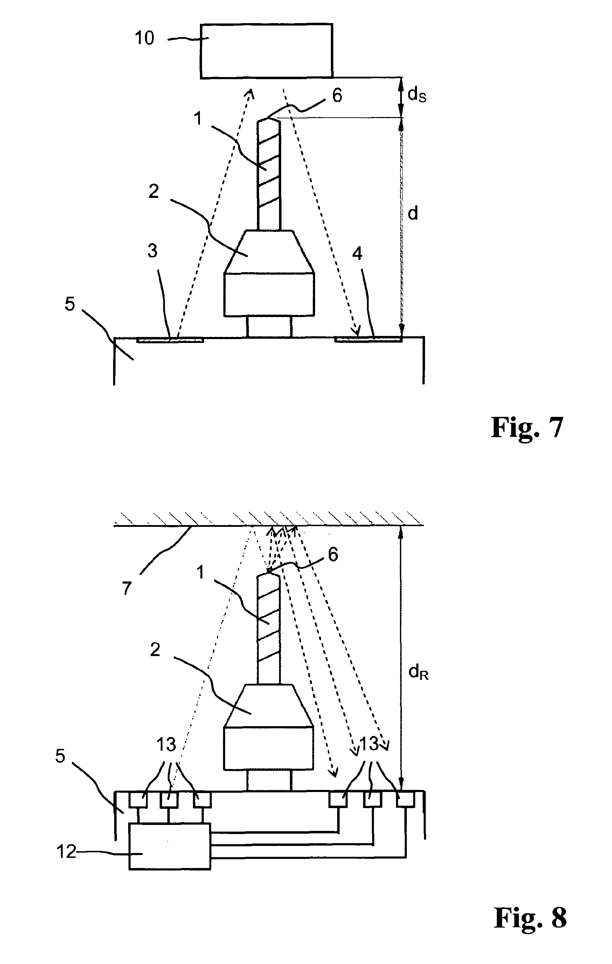

In Fig. 6 ist eine Möglichkeit dargestellt, die Rückstreuung eines Radarsignals von einem zu vermessenden Werkzeug 11 gezielt zu beeinflussen, um einen ausgeprägten Messeffekt zu erzeugen. Hierzu ist ein einseitig geöffneter Hohlraum 9 vorgesehen, der aus einem becherförmigen metallischen Körper besteht und in Fig. 8 schematisch im Querschnitt dargestellt ist. Das Werkzeug 11, welches in der in Fig. 8 gezeigten Ausführung einen Fräser darstellt, wird teilweise in den Hohlraum 9 eingeführt. Die Intensität des aus dem durch das Werkzeug teilweise gefüllten Hohlraum 9 zu dem Radarmodul 4 zurückgestreuten Signals ist abhängig von der genauen Position des Werkzeugs 11 im Hohlraum 9, welcher durch das Werkzeug 11 in verschiedene Segmente unterteilt wird, in welchen sich bei verschiedenen Frequenzen unterschiedliche Moden bilden können, die gegebenenfalls untereinander koppeln. Es entsteht auf diese Weise eine ausgeprägte Frequenzabhängigkeit der Rückstreuung, aus der auf die Position des Werkzeugs in dem Hohlraum und daraus bei bekannter Position der Spannvorrichtung 2 relativ zu dem Hohlraum 9 auf die Länge des Werkzeugs 11 geschlossen werden kann.

In Fig.7 ist eine andere Möglichkeit dargestellt, die Rückstreuung eines Radarsignals von einem zu vermessenden Werkzeug 11 gezielt zu beeinflussen, um einen ausgeprägten Messeffekt zu erzeugen. Sie basiert auf einem aus Material hoher Permittivität gefertigten Resonanzkörper 10, der im freien Raum bei einer bestimmten Frequenz einen maximalen Rückstreuquerschnitt besitzt. Das Werkzeug 1 wird schrittweise an diesen Resonanzkörper 10, der an einer definierten Position im Bewegungsbereich der Arbeitsspindel 5 rückwirkungsarm befestigt ist, angenähert. Durch die Annäherung des Werkzeugs 1 ändert sich die Frequenz, bei welcher der Rückstreuquerschnitt der gesamten Anordnung maximal ist, in Abhängigkeit vom Abstand $d_s$ des vordersten Punktes 6 des Werkzeugs 1 von dem Resonanzkörper 10 in definierter Weise. Aus dieser Frequenz kann somit der Abstand $d_s$ und daraus bei bekanntem Abstand der Arbeitsspindel 5 von dem Resonanzkörper 10 die Länge d des Werkzeugs ermittelt werden.

Fig.8 zeigt eine Anordnung ähnlich Fig. 2, jedoch mit einem multistatischen Ultrabreitband-Radarmodul 12, welches über mehrere verteilt positionierte Antennen 13 verfügt. Über jede der Antennen 13 kann wahlweise gesendet oder empfangen werden. Ein von einer der Antennen 13 abgestrahlter kurzer Impuls wird über Reflexionen an der reflektierenden Oberfläche 7 vom interessierenden Punkt 6 auf dem Werkzeug 1 in Richtung aller Antennen 13 zurückgestreut, wobei in Fig. 8 der Übersichtlichkeit halber nur die Rückstreuung zu den auf der rechten Seite der Arbeitsspindel 5 angeordneten Antennen 13 dargestellt ist. Die Laufzeit eines Impulses bis zum Empfang durch eine bestimmte Antenne 13 hängt von der Länge des insgesamt durchlaufenen Pfades und damit auch von der Entfernung zwischen der abstrahlenden Antenne 13 und der empfangenden Antenne 13 ab.

Von allen über das Werkzeug 1 führenden Rückstreupfaden, die von einer Antenne 13 auf einer Seite des Werkzeugs 1 zu einer Antenne 13 auf der anderen Seite des Werkzeugs 1 führen, ist der über den vordersten Punkt 6 des Werkzeugs 1 führende Pfad der kürzeste, so dass ein über diesen Punkt 6 zurückgestreuter Impuls vor weiteren zurückgestreuten Impulsen, deren Pfade über andere Streupunkte auf der Oberfläche des Werkzeugs 1 verlaufen, empfangen wird. Indem durch schnelle Schalter in den Empfängern des Ultrabreitband-Radarmoduls 12 nachfolgende Signale abgetrennt werden, kann der über den interessierenden Punkt 6 zurückgestreute Impuls isoliert weiterverarbeitet werden.

Weiterhin kann durch schnelle Schalter in den Signalleitungen zwischen den Antennen 13 und den Empfängern des Ultrabreitband-Radarmoduls 12 der Zeitraum hoher Empfangsempfindlichkeit auf ein kurzes Zeitintervall eingegrenzt werden. Dieses kurze Zeitintervall steht in Beziehung mit einem die abstrahlende Antenne 13 und die empfangende Antenne 13 umgebenden Rotationsellipsoid, welches im dreidimensionalen Raum den Ort aller Streukörper angibt, deren Abstände zur abstrahlenden Antenne 13 und zur empfangenden Antenne 13 die gleiche Summe ergeben. Jedes zwischen der abstrahlenden Antenne 13 und der empfangenden Antenne 13 unter Rückstreuung über einen auf besagtem Rotationsellipsoid positionierten Streukörper übertragene Signal erfährt unter der Bedingung konstanter Ausbreitungsgeschwindigkeit die gleiche Verzögerung. Die vergleichende Analyse mehrerer Signalübertragungen über mehrere Kombinationen von abstrahlenden und empfangenden Antennen 13 ermöglicht somit die eindeutige Bestimmung der Position eines Streukörpers und somit auch die Extraktion des über den Punkt 6 am vorderen Ende des Werkzeugs 1 zurückgestreuten Signals aus der Gesamtheit der zurückgestreuten Signale, womit die Position bzw. Länge des Werkzeugs 1 bestimmbar ist.

Wie den vorausgehenden Ausführungsbeispielen zu entnehmen ist, ermöglicht die Erfindung bei definierter Einspannung eines Werkzeugs 1 oder 11 in der Spannvorrichtung 2 einer Arbeitsspindel 5 insbesondere die Bestimmung der Werkzeuglänge anhand der Messung der Position des vorderen Endes 6 des Werkzeugs 1 oder 11. Auf diese Weise ist eine Verkürzung des Werkzeugs 1 oder 11 durch Verschleiß oder Beschädigung erkennbar. Darüber hinaus können auch die lateralen Abmessungen festgestellt werden, wie insbesondere anhand des Ausführungsbeispiels nach Fig. 6 ersichtlich ist, bei dem die Weite des Spaltes zwischen dem Werkzeug 11 und dem Hohlraum 9 vom Durchmesser des Werkzeugs 11 abhängt. Schließlich kann mit der Erfindung auch wie zuvor erwähnt eine fehlerhafte Position eines Werkzeugs 1 oder 11 in einer Spannvorrichtung 2 oder eine Verformung festgestellt werden. Die Erfindung eignet sich also universell zur Überwachung sowohl der Abmessungen, als auch der Position eines Werkzeugs 1 oder 11, insbesondere zur Detektion einer Abweichung von vorbestimmten Soll-Abmessungen und/oder von einer vorbestimmten Soll-Position.

Die in den Figuren dargestellten Werkzeugformen sind als beispielhaft zu verstehen. Grundsätzlich ist jede Variante der Erfindung auf jede Art von Werkzeug anwendbar, d.h. die Ermittlung der Abmessungen eines Fräsers 11 erfordert nicht zwingend den Einsatz eines Hohlkörpers 9. Ebenfalls beispielhaft ist die in den Figuren 2 bis 4, 6 und 7 dargestellte Konfiguration gemeint, bei der ein Radarmodul 3 als Sender und ein anderes, symmetrisch gegenüberliegendes Radarmodul als Empfänger fungiert. Stattdessen könnte bis auf die Ausführungsform nach Fig. 8 ein zurückgestreutes Signal auch von demselben Radarmodul empfangen werden, von dem das Sendesignal abgestrahlt wurde. Solche und vergleichbare Modifikationen liegen im Ermessen des Fachmannes und sollen vom Schutz der Patentansprüche umfasst sein.

## Patentansprüche

1. Verfahren zur Bestimmung von Abmessungen und/oder Positionsdaten eines Werkzeugs (1; 11), das in einer Spannvorrichtung (2) einer Arbeitsspindel (5) einer Bearbeitungsmaschine gespannt ist, wobei durch mindestens ein Radarmodul (3, 4; 12) ein Radarsignal abgestrahlt und ein aus dem Bearbeitungsraum zurückgestreutes Radarsignal empfangen wird und aus dem empfangenen Signal Abmessungen des Werkzeugs (1; 11) und/oder Positionsdaten des Werkzeugs (1) bezüglich der Spannvorrichtung (2) ermittelt werden, **dadurch gekennzeichnet, dass** das Radarmodul an der dem Bearbeitungsraum der Bearbeitungsmaschine zugewandten Seite der Arbeitsspindel (5) angeordnet ist, und dass durch das Werkzeug (1; 11) eine vorbestimmte Bewegung relativ zu dem Radarmodul (3, 4; 12) oder relativ zu einer fixen Reflexionsoberfläche (7), über welche Signale von dem Werkzeug (1; 11) indirekt über Reflexion zu dem Radarmodul (3,4; 12) zurückgestreut werden, ausgeführt wird und Daten dieser Bewegung mit dem zurückgestreuten Signal zur Ermittlung der Abmessungen und/oder Positionsdaten des Werkzeugs (1;11) verknüpft werden, wobei die vorbestimmte Bewegung eine Drehung um eine zum Normalenvektor einer reflektierenden Oberfläche (7) orthogonale Achse ist, oder eine Translationsbewegung ist, deren Richtung eine Komponente in Normalenrichtung einer reflektierenden Oberfläche (7) enthält.

2.  Verfahren nach Anspruch 1, **dadurch gekennzeichnet, dass** die Rückstreuung von dem Werkzeug (1; 11) zu dem Radarsystem (3, 4; 12) zumindest teilweise indirekt über eine reflektierende Oberfläche (7) erfolgt.

3.  Verfahren nach Anspruch 1 oder 2, **dadurch gekennzeichnet, dass** eine Drehbewegung des Werkzeugs (1) um seine Rotationsachse erfolgt.

4.  Verfahren nach einem der Ansprüche 1 bis 3, **dadurch gekennzeichnet, dass** die Frequenz des abgestrahlten Radarsignals variiert wird und zur Ermittlung der Abmessungen und/oder Positionsdaten des Werkzeugs (1; 11) die Änderung des zurückgestreuten Signals in Abhängigkeit von der Frequenz ausgewertet wird.

5.  Verfahren nach Anspruch 4, **dadurch gekennzeichnet, dass** zur Ermittlung der Abmessungen und/oder Positionsdaten des Werkzeugs (1) mindestens ein Minimum oder Maximum des zurückgestreuten Signals als Funktion der Frequenz bestimmt wird.

6.  Verfahren nach Anspruch 4 oder 5, **dadurch gekennzeichnet, dass** das Werkzeug (1; 11) durch Bewegung der Spannvorrichtung (2) in einen einseitig offenen rückstreuenden Hohlraum (9) eingeführt wird, und dass aus einer durch diese Bewegung verursachten Änderung der Frequenzabhängigkeit des zurückgestreuten Signals Abmessungen und/oder Positionsdaten des Werkzeugs (1; 11) bezüglich der Spannvorrichtung (2) ermittelt werden.

7.  Verfahren nach Anspruch 4 oder 5, **dadurch gekennzeichnet, dass** das Werkzeug (1; 11) durch Bewegung der Spannvorrichtung (2) an einen Körper (10) mit frequenzabhängigem Rückstreuquerschnitt angenähert wird, und dass aus der durch diese Bewegung verursachten Änderung der Frequenzabhängigkeit des Rückstreuquerschnitts der gesamten, aus dem Körper (10) und dem Werkzeug (1;11) bestehenden Anordnung Abmessungen und/oder Positionsdaten des Werkzeugs (1; 11) bezüglich der Spannvorrichtung (2) ermittelt werden.

8.  Verfahren nach einem der Ansprüche 1 bis 7, **dadurch gekennzeichnet, dass** als Radarmodul (12) ein multistatisches Ultrabreitband-Radarmodul mit mehreren räumlich verteilten, zum Senden oder Empfangen individuell auswählbaren Antennen (13) verwendet wird, und dass nacheinander über jeweils eine der Antennen (13) ein impulsförmiges Signal abgestrahlt und aus dem Bearbeitungsraum zurückgestreute Signale über mehrere verschiedene andere Antennen (13) empfangen werden, und dass aus den empfangenen Signalen und den Positionen der jeweils abstrahlenden Antenne (13) und der empfangenden Antennen (13) Abmessungen des Werkzeugs (1; 11) und/oder Positionsdaten des Werkzeugs (1) bezüglich der Spannvorrichtung (2) ermittelt werden.

**Claims**

1.  Method for determining dimensions and/or position data of a tool (1; 11) which is clamped in a clamping device (2) of a work spindle (5) of a machine tool, wherein a radar signal is emitted and a radar signal back-scattered from the machining chamber is received by at least one radar module (3, 4; 12) and dimensions of the tool (1; 11) and/or position data of the tool (1) with respect to the clamping device (2) are determined from the signal received, **characterised in that** the radar module is arranged on the side of the work spindle (5) facing the machining chamber of the machine tool, and **in that** the tool (1; 11) executes a predetermined movement relative to the radar module (3, 4; 12) or relative to a fixed reflecting surface (7) by means of which signals from the tool (1; 11) are back-scattered indirectly by means of reflection to the radar module (3, 4; 12) and data of this movement is connected logically with the back-scattered signal to determine the dimensions and/or position data of the tool (1; 11), wherein the predetermined movement is a turning movement about an axis orthogonal to the normal vector of a reflecting surface (7), or a translation movement the direction of which comprises a component in the normal direction of a reflecting surface (7).

2.  Method according to claim 1, **characterised in that** the back-scattering from the tool (1; 11) to the radar system (3, 4; 12) is effected at least partly indirectly by means of a reflecting surface (7).

3. Method according to claim 1 or 2, **characterised in that** a turning movement of the tool (1) is effected about its axis of rotation.

4. Method according to one of claims 1 to 3, **characterised in that** the frequency of the emitted radar signal is varied and the change in the back-scattered signal depending on the frequency is evaluated to determine the dimensions and/or position data of the tool (1; 11).

5. Method according to claim 4, **characterised in that** to determine the dimensions and/or position data of the tool (1) at least one minimum or maximum of the back-scattered signal is determined as a function of the frequency.

6. Method according to claim 4 or 5, **characterised in that** the tool (1; 11) is introduced into a back-scattering cavity (9) open on one side by movement of the clamping device (2), and **in that** dimensions and/or position data of the tool (1; 11) with respect to the clamping device (2) are determined from a change in the dependency of the frequency of the back-scattered signal caused by this movement.

7. Method according to claim 4 or 5, **characterised in that** the tool (1; 11) is moved up to a body (10) with a frequency-dependent back-scattering cross-section by movement of the clamping device (2), and **in that** dimensions and/or position data of the tool (1; 11) with respect to the clamping device (2) are determined from the change in the dependencyof the frequency of the back-scattering cross-section of the entire arrangement consisting of the body (10) and the tool (1; 11) caused by this movement.

8. Method according to one of claims 1 to 7, **characterised in that** a multi-static ultra broadband radar module with a plurality of spatially distributed antennae (13) which can be selected individually for transmitting or receiving is used as the radar module (12), and **in that** a pulsed signal is emitted by in each case one of the antennae (13) in succession and signals back-scattered from the machining chamber are received by means of a plurality of different other antennae (13), and **in that** dimensions of the tool (1; 11) and/or position data of the tool (1) with respect to the clamping device (2) are determined from the signals received and the positions of the emitting antenna (13) in each case and the receiving antennae (13).

**Revendications**

1. Procédé servant à déterminer des dimensions et/ou des données de position d'un outil (1 ; 11), qui est serré dans un dispositif de serrage (2) d'une broche de travail (5) d'une machine d'usinage, sachant qu'un signal radar est émis par au moins un module radar (3, 4 ; 12) et qu'un signal radar rétrodiffusé depuis l'espace d'usinage est reçu et que des dimensions de l'outil (1 ; 11) et/ou des données de position de l'outil (1) par rapport au dispositif de serrage (2) sont déterminées à partir du signal reçu, **caractérisé en ce que** le module radar est disposé au niveau du côté, tourné vers l'espace d'usinage de la machine d'usinage, de la broche de travail (5), et **en ce qu'**un déplacement préalablement défini par rapport au module radar (3, 4 ; 12) ou par rapport à une surface de réflexion (7) fixe, par l'intermédiaire de laquelle des signaux sont rétrodiffusés depuis l'outil (1 ; 11) indirectement par réflexion en direction du module radar (3, 4 ; 12), est exécuté, et **en ce que** des données dudit déplacement sont combinées au signal rétrodiffusé afin de déterminer des dimensions et/ou des données de position de l'outil (1 ; 11), sachant que le déplacement préalablement défini est une rotation autour d'un axe orthogonal par rapport au vecteur de la normale d'une surface (7) réfléchissante ou est un déplacement par translation, dont la direction inclut une composante dans la direction de la normale d'une surface (7) réfléchissante.

2. Procédé selon la revendication 1, **caractérisé en ce que** la rétrodiffusion depuis l'outil (1 ; 11) en direction du système radar (3, 4 ; 12) est effectuée au moins en partie indirectement par l'intermédiaire d'une surface (7) réfléchissante.

3. Procédé selon la revendication 1 ou 2, **caractérisé en ce qu'**un déplacement de rotation de l'outil (1) est effectué autour de son axe de rotation.

4. Procédé selon l'une quelconque des revendications 1 à 3, **caractérisé en ce que** la fréquence du signal radar émis varie, et **en ce que** la modification du signal rétrodiffusé en fonction de la fréquence est analysée afin de déterminer les dimensions et/ou les données de position de l'outil (1 ; 11).

**5.** Procédé selon la revendication 4, **caractérisé en ce qu'**au moins un minimum ou un maximum du signal rétrodiffusé est défini en tant que fonction de la fréquence afin de déterminer les dimensions et/ou les données de position de l'outil (1).

**6.** Procédé selon la revendication 4 ou 5, **caractérisé en ce que** l'outil (1 ; 11) est introduit, par le déplacement du dispositif de serrage (2), dans un espace creux (9) rétrodiffusant ouvert d'un côté, et **en ce que** des dimensions et/ou des données de position de l'outil (1 ; 11) par rapport au dispositif de serrage (2) sont déterminées à partir d'une modification, provoquée par ledit déplacement, de la dépendance à la fréquence du signal rétrodiffusé.

**7.** Procédé selon la revendication 4 ou 5, **caractérisé en ce que** l'outil (1, 11) est approché, par le déplacement du dispositif de serrage (2), d'un corps (10) présentant une section transversale de rétrodiffusion dépendant de la fréquence, et **en ce que** des dimensions et/ou des données de position de l'outil (1 ; 11) par rapport au dispositif de serrage (2) sont déterminées à partir de la modification, provoquée par ledit déplacement, de la dépendance à la fréquence de la section transversale de rétrodiffusion de la totalité de l'ensemble constitué du corps (10) et de l'outil (1 ; 11).

**8.** Procédé selon l'une quelconque des revendications 1 à 7, **caractérisé en ce qu'**un module radar à bande ultra large pourvue de plusieurs antennes (13) réparties spatialement, pouvant être sélectionnées afin d'envoyer ou de recevoir individuellement est utilisé en tant que module radar (12), et **en ce que** des signaux présentant une forme d'impulsion sont émis les uns après les autres par l'intermédiaire de respectivement une des antennes (13), et **en ce que** des signaux rétrodiffusés depuis l'espace d'usinage sont reçus par l'intermédiaire de plusieurs autres antennes (13) différentes, et **en ce que** des dimensions de l'outil (1 ; 11) et/ou des données de position de l'outil (1) par rapport au dispositif de serrage (2) sont déterminées à partir des signaux reçus et des positions de l'antenne (13) émettrice respectivement et de l'antenne (13) réceptrice.

**Fig. 1**

**Fig. 2**

Fig. 3

Fig. 4

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4020551 A1
- DE 19813041 A1

- EP 2402114 A1